# EUROPEAN PATENT APPLICATION

(11) **EP 2 756 751 A1**
(43) Date of publication of application: **23.07.2014**
(21) Application number: 14151382.0
(22) Date of filing: 16.01.2014
(51) Int. Cl.: A01K 85/00

(54) **Fishing bait**

(30) Priority: 18.01.2013 GB 201300893
(71) Applicant: Mills, Paul, West Green Crawley Sussex RH11 7HX (GB)
(72) Inventor: Mills, Paul, West Green Crawley Sussex RH11 7HX (GB)
(74) Representative: Sweetinburgh, Mark Roger

(57) **Abstract**

Described are bait compositions (1) for use in fishing, comprising a plurality of integrally formed artificial creatures (2). The artificial creatures may comprise one or more of artificial maggots, grubs, larvae, worms, meal worms and/or other commonly found natural water born creatures. Also described are bait structures comprising two or more bait compositions (1), method for manufacturing the bait compositions and structures, and use of the bait structures and compositions for fishing.

## Description

The present invention relates to fishing bait in particular to fishing bait for catching large fish such as carp.

Fishing is a very popular pastime with a large following in the UK and worldwide. There is a particular interest in fishing for large fish; however, there are a number of challenges and problems associated with targeting these fish.

One such problem is with regard to the bait which is used. Whilst many different types of bait have been used, the use of maggots has become increasingly popular, especially for carp fishing. Maggots are notoriously difficult to use for catching large fish. Typically, several maggots will be threaded onto a hook or fishing line in order to provide a large enough collection of maggots to attract a large fish. This, in itself poses difficulties since maggots often break apart or fall off even before the line has been cast.

Even if the collection of maggots makes it into the water, it is often the case that small fish will start to eat the maggots. As a result, the number of maggots will quickly reduce and the attractiveness of the bait to a large fish will quickly diminish. In order to rectify this, more maggots must be added to the hook or line at frequent intervals. This is not only frustrating for the person fishing, but also results in a significant waste of time and maggots.

It is, therefore, an object of the present invention to seek to alleviate the above identified problems.

### SUMMARY OF THE INVENTION

According to one aspect of the present invention, there is provided a bait composition for use in fishing, the bait composition comprising a plurality of integrally formed artificial creatures. Preferably, the artificial creatures comprise one or more of artificial maggots, grubs, larvae, worms, meal worms and/or other commonly found natural water born creatures, for example animals or insects.

Most preferably, the artificial creatures are artificial maggots.

The bait composition of the present invention is particularly effective for catching large fish such as carp. In this respect, whilst smaller fish might try to eat one or more of the artificial creatures, they will not be able to remove the artificial creatures from the bait composition. This means that the person fishing will not have to repeatedly refresh the bait they are using. Rather, the bait composition will remain attractive to large fish indefinitely. The result is that more large fish are caught and the bait used does not need to be continually refreshed. The time saved in this regard is particularly important during match fishing.

The size of the bait composition can be adjusted to suit the fish being targeted. For example, for smaller fish species such as barble, tench, bream, roach, rudd, perch, pike and chub, a bait composition provided in a small size can be very effective. In this respect, whilst the smaller size of the bait composition will allow smaller species of fish to be targeted, the same benefit can be provided because the bait composition will resist destruction by small young fish of that species and allow large specimens to be caught.

Preferably, the bait composition of the present invention is at least about 10mm in diameter.

Preferably, the bait composition comprises at least two artificial creatures, preferably at least about three, preferably at least about four, preferably at least about five, most preferably about six or more.

Preferably, each artificial creature comprises a head end and a tail end and the artificial creatures are arranged so that the tail ends are towards the edge of the bait composition. Such an orientation has been found to be particularly effective at attracting large fish.

Preferably, each artificial creature comprises a head end and a tail end and the artificial creatures are arranged so that the head ends are towards the centre of the bait composition. Such an orientation has been found to be particularly effective at attracting large fish.

Preferably, the artificial creatures are made from a rubber or plastics material.

Preferably, the artificial creatures are made from a flexible rubber or plastics material.

Preferably, one or more of the artificial creatures are buoyant.

Preferably, one or more of the artificial creatures are non-buoyant.

Preferably, the bait composition comprises buoyant and non-buoyant artificial creatures. This allows the speed at which the bait composition sinks or the ability of the bait composition to float to be variable between bait compositions comprising different ratios of buoyant and non-buoyant artificial creatures.

Preferably, the bait composition is buoyant.

Alternatively, the bait composition is non-buoyant.

Preferably, the bait composition comprises one or more joining members for joining together two or more bait compositions of the present invention or for attaching a bait composition of the present invention to a fishing line or hook.

Preferably, the bait composition comprises two joining members. Preferably, one joining member is provided on a first face of the bait composition and another joining member is provided on a second face of the bait composition.

Preferably, the joining members are of different sizes.

Preferably, a first joining member is provided for attachment of the bait composition to a further bait composition.

Preferably, a second joining member is provided for attachment of the bait composition to a fishing line or hook.

Preferably, the bait composition comprises a joining member extending from a first face of the bait composition to a second face of the bait composition.

Preferably, the one or more joining members are formed integrally with the plurality of artificial creatures.

According to another aspect of the present invention, there is provided a bait structure comprising two or more bait compositions as described herein.

Preferably, the bait compositions are joined together by a joining member.

Preferably, the bait structure comprises two or more integrally formed bait compositions.

According to another aspect of the present invention, there is provided a method for manufacturing a bait composition or bait structure as described herein.

Another aspect of the present invention relates to a method of fishing comprising the use of a bait composition or bait structure as described herein.

According to another aspect of the present invention, there is provided use of a bait composition or bait structure as described herein for fishing.

### DETAILED DESCRIPTION

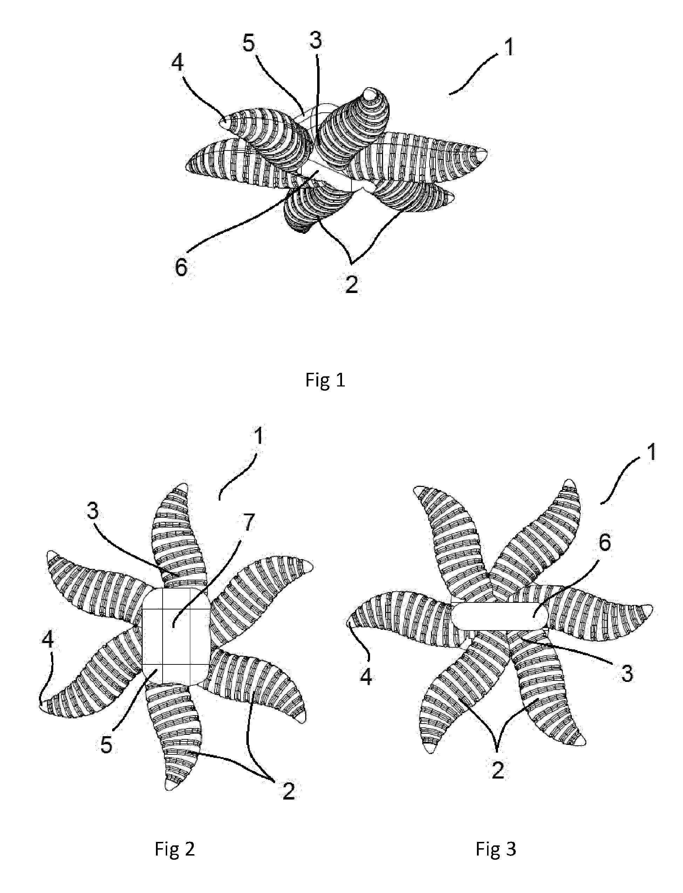

Example embodiments of the present invention will now be described with reference to the accompanying figures, in which
Figure 1 shows a first view of a bait composition comprising a plurality of artificial creatures;
Figure 2 shows a second view of a bait composition comprising a plurality of artificial creatures; and
Figure 3 shows a third view of a bait composition comprising a plurality of artificial creatures.

The present invention relates to bait for use in fishing, in particular for catching large fish such as carp.

Within this specification embodiments have been described in a way which enables a clear and concise specification to be written, but it is intended and will be appreciated that embodiments may be variously combined or separated without parting from the invention.

Within this specification, the term "about" means plus or minus 20%, more preferably plus or minus 10%, even more preferably plus or minus 5%, most preferably plus or minus 2%.

Within this specification, it will be appreciated that the terms buoyant and non-buoyant are with reference to the ability to float in water.

Within this specification, the term "artificial creature" means an artificial version of a living creature, for example an artificial maggot. It will be appreciated that the living creature may be represented in an alive or dead state.

With reference to the Figures, there is provided a bait composition 1 comprising six artificial live maggots 2. Each artificial maggot 2 has a head end 3 and a tail end 4. The maggots 2 are positioned so that the head ends 3 are towards the centre of the bait composition 1 and the tail ends 4 are towards the outside of the bait composition 1.

The bait composition 1 further comprises first 5 and second 6 joining members provided on opposite sides of the bait composition 1. The joining members 5, 6 allow two or more bait compositions 1 to be joined together or for the bait composition 1 to be attached to a hook or fishing line (not shown). The joining members 5, 6 may be formed as a single joining member.

In the example shown, the first joining member 5 has a substantially flat surface 7 to which the corresponding flat surface 7 of a joining member of a second bait composition can be secured to form a bait structure of two bait compositions. For example, two bait compositions could be joined together with an adhesive, such as a pressure-sensitive adhesive.

The second joining member 6 is narrower that the first joining member 5 and is more suitable for attachment to a hook or a fishing line. For example, the second joining member 6 could be used to attach a single bait composition to a hook or a fishing line. In other examples, the second joining member 6 could be used to attach a bait structure to a hook or a fishing line, for example a bait structure formed from two bait compositions joined together at their respective first joining members.

It will also be appreciated that a fishing line or a hook could be passed through the centre of the bait composition, passing through both joining members. In this way, multiple bait compositions could be joined together.

The maggots 2 and joining members 5, 6 are formed together as a single rubber or plastic structure. For example, the bait composition 1 may be formed from a single injection mould (not shown). It is envisaged that the rubber or plastics material from which the maggots 2 and the joining members 5, 6 are formed is flexible and permits movement of the artificial maggots in water.

The bait compositions of the present invention can be provided in various colours and sizes to suit the intended application. For example, in some embodiments, the bait compositions can be provided in bright colours for allowing improved visibility of their position in the water. They may also be provided in a luminous colour with the intended use for fishing during darkness or in very deep water.

Alternatively, the bait compositions can be provided in a colour corresponding to the naturally occurring colour of the creature to which the artificial creature corresponds.

The invention includes the following embodiments.
1. A bait composition for use in fishing, the bait composition comprising a plurality of integrally formed artificial creatures.
2. A bait composition according to embodiment 1, wherein the artificial creatures comprise one or more of artificial maggots, grubs, larvae, worms, meal worms and/or other commonly found natural water born creatures.
3. A bait composition according to any preceding embodiment, wherein the artificial creatures are artificial maggots.
4. A bait composition according to any preceding embodiment, comprising at least two artificial creatures.
5. A bait composition according to any preceding embodiment, comprising about six artificial creatures.
6. A bait composition according to any preceding embodiment, wherein each artificial creature comprises a head end and a tail end and the artificial creatures are arranged so that the tail ends are towards the edge of the bait composition.
7. A bait composition according to any preceding embodiment, wherein each artificial creature comprises a head end and a tail end and the artificial creatures are arranged so that the head ends are towards the centre of the bait composition.
8. A bait composition according to any preceding embodiment, wherein the artificial creatures are made from rubber or a plastics material.
9. A bait composition according to any preceding embodiment, wherein one or more of the artificial creatures are buoyant.
10. A bait composition according to any preceding embodiment, wherein one or more of the artificial creatures are non-buoyant.
11. A bait composition according to any preceding embodiment, comprising buoyant and non-buoyant artificial creatures.
12. A bait composition according to any preceding embodiment which is buoyant.
13. A bait composition according to any of embodiments 1 to 11 which is non-buoyant.
14. A bait composition according to any preceding embodiment, comprising one or more joining members for joining together two or more bait compositions according to any preceding embodiment or for attaching a bait composition according to any preceding embodiment to a fishing line or hook.
15. A bait composition according to embodiment 14, comprising two joining members.
16. A bait composition according to embodiment 14 or 15, wherein one joining member is provided on a first face of the bait composition and another joining member is provided on a second face of the bait composition.
17. A bait composition according to any of embodiments 14 to 16, comprising joining members of different sizes.
18. A bait composition according to any of embodiments 14 to 17 comprising a first joining member for attachment of the bait composition to a further bait composition and a second joining member for attachment of the bait composition to a fishing line or hook.
19. A bait composition substantially as hereinbefore described with reference to the accompanying figures.
20. A bait structure comprising two or more bait compositions according to any preceding embodiment.
21. A bait structure according to embodiment 20, wherein the bait compositions are joined together by a joining member.
22. A bait structure according to embodiment 20 or 21 comprising two or more integrally formed bait compositions.
23. A bait structure substantially as hereinbefore described with reference to the accompanying figures.
24. A method for manufacturing a bait composition according to any of embodiments 1 to 19 or bait structure according to any of embodiments 20 to 23.
25. A method of fishing comprising the use of a bait composition according to any of embodiments 1 to 19 or bait structure according to any of embodiments 20 to 23.
26. Use of a bait composition according to any of embodiments 1 to 19 or bait structure according to any of embodiments 20 to 23 for fishing.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A bait composition for use in fishing, the bait composition comprising a plurality of integrally formed artificial creatures.

2. A bait composition according to claim 1, wherein the artificial creatures comprise one or more of artificial maggots, grubs, larvae, worms, meal worms and/or other commonly found natural water born creatures, preferably wherein the artificial creatures are artificial maggots.

3. A bait composition according to any preceding claim, comprising at least two artificial creatures, preferably comprising about six artificial creatures.

4. A bait composition according to any preceding claim, wherein (i) each artificial creature comprises a head end and a tail end and the artificial creatures are arranged so that the tail ends are towards the edge of the bait composition and/or (ii) wherein each artificial creature comprises a head end and a tail end and the artificial creatures are arranged so that the head ends are towards the centre of the bait composition.

5. A bait composition according to any preceding claim, wherein the artificial creatures are made from rubber or a plastics material.

6. A bait composition according to any preceding claim, wherein one or more of the artificial creatures are buoyant and/or wherein one or more of the artificial creatures are non-buoyant.

7. A bait composition according to any preceding claim, comprising one or more joining members for joining together two or more bait compositions according to any preceding claim or for attaching a bait composition according to any preceding claim to a fishing line or hook, optionally (i) comprising two joining members, and/or (ii) wherein one joining member is provided on a first face of the bait composition and another joining member is provided on a second face of the bait composition, and/or (iii) comprising joining members of different sizes, and/or (iv) comprising a first joining member for attachment of the bait composition to a further bait composition and a second joining member for attachment of the bait composition to a fishing line or hook.

8. A bait composition substantially as hereinbefore described with reference to the accompanying figures.

9. A bait structure comprising two or more bait compositions according to any preceding claim.

10. A bait structure according to claim 9, wherein the bait compositions are joined together by a joining member.

11. A bait structure according to claim 9 or 10 comprising two or more integrally formed bait compositions.

12. A bait structure substantially as hereinbefore described with reference to the accompanying figures.

13. A method for manufacturing a bait composition according to any of claims 1 to 8 or bait structure according to any of claims 9 to 12.

14. A method of fishing comprising the use of a bait composition according to any of claims 1 to 8 or bait structure according to any of claims 9 to 12.

15. Use of a bait composition according to any of claims 1 to 8 or bait structure according to any of claims 9 to 12 for fishing.
